# EUROPÄISCHE PATENTSCHRIFT

(11) **EP 0 531 762 B1**
(45) Veröffentlichungstag und Bekanntmachung des Hinweises auf die Patenterteilung: **04.09.1996**
(21) Anmeldenummer: 92114122.2
(22) Anmeldetag: 19.08.1992
(51) Int. Cl.: B01D 33/21, B01D 33/23, B01D 33/37, B01D 33/46, B01D 33/50, B01D 33/64, B01D 33/76, B01D 33/80, B01D 36/00

(54) **Filter zum kontinuierlichen Filtern von Feststoffe od. dgl. aufweisenden Flüssigkeiten**
Filter for continuous filtration of liquids containing solids and the same
Filtre de filtration de liquides en continu contenant des solides et similaires

(30) Priorität: 11.09.1991 DE 4130145; 05.08.1992 DE 4225818
(43) Veröffentlichungstag der Anmeldung: 17.03.1993
(73) Patentinhaber: Geldmacher, Joachim, Dipl.-Ing., D-51588 Nümbrecht (DE)
(72) Erfinder: Geldmacher, Joachim, Dipl.-Ing., D-51588 Nümbrecht (DE)
(74) Vertreter: Mentzel, Norbert, Dipl.-Phys.

(56) Entgegenhaltungen:
- EP-A- 0 479 077
- NL-A- 8 103 750
- US-A- 1 649 581
- US-A- 3 643 806

## Beschreibung

Die Erfindung betrifft einen Filter zum kontinuierlichen Filtern von Feststoffe aufweisenden Flüssigkeiten nach dem Oberbegriff des Anspruchs 1.

Ein ähnlicher Filter wird in der DE-A-36 14 668 beschrieben. Dieser Filter ist vom Typ her ein in der Celluloseindustrie verbreiteter rotierender Trommel- oder Plattenfilter mit horizontaler Hohlwelle und in Filtersektionen unterteilten Filterscheiben. Beim bestimmungsgemäßen Gebrauch des Filters ist der geschlossene zylindrische Behälter annähernd bis zur Hälfte mit der zu filternden Flüssigkeit gefüllt, damit die feststehenden Einrichtungen auf beiden Seiten jeder Filterscheibe zum Abnehmen und Entfernen der Feststoffe von den die Filterscheibenaußenseiten bildenden Filterauflagen oberhalb der zu filternden Flüssigkeit liegen. Dadurch ist zwar in einfacher Weise ein Abnehmen und Entfernen der Feststoffe von den die Filterscheibenaußenseiten bildenden Filterauflagen möglich, aber für das eigentliche Filtern steht von den Filterflächen der Filterscheiben jeweils nur annähernd die Hälfte zum bestimmungsgemäßen Gebrauch zur Verfügung, da die Filterscheiben lediglich mit dieser Hälfte in die zu filternde Flüssigkeit eintauchen.

Für große Durchlaufleistungen sind daher verhältnismäßig große Filter erforderlich.

Ein Druckfilter gemäß dem Oberbegriff des Anspruchs 1 wird als eine Ausführungsform in der EP-A-479 077 offenbart, die einen Druckfilter mit kontinuierlicher Abreinigung der Filterfläche beschreibt. Zum Aufbau des Filters gehören ein Druckraum mit Anschlüssen für einen Fluidzulauf, einen Filtratablauf und eine Rückspülleitung zum Austrag der an der Filterfläche abgeschiedenen Fluidinhaltsstoffe. Die Filterscheiben sind einstückig ausgeführt, und die Hohlwelle ist vertikal gelagert. Der Filter gestattet das Erreichen einer im Vergleich zur o.g. Patentanmeldung großen Durchlaufleistung bei geringen Baumaßen. Zur Abreinigung der Filterfläche ist ein Rückspülkopf aus ortsfesten Absaugkammern vorgesehen, die in den Fluidraum zwischen den Filterplatten eingreifen. Da diese Reinigung zumeist nicht ausreicht, sind zusätzliche Reinigungsmaßnahmen, beispielsweise durch das Vorsehen einer Ultrabeschallung, vorgesehen. Zum Austrag der an von der Filterfläche entfernten Feststoffe sind verschiedene Möglichkeiten bekannt. Eine der in der EP-A-479 077 vorgesehenen Rückspülleitung alternative Möglichkeit, um die sich in derartigen ortsfesten Kammern sammelnden Feststoffe zu entfernen, ist in der NL-A-8103750 dargestellt. Der Abtransport der Feststoffe erfolgt dort mittels einer Absaugung.

Der Erfindung liegt die Aufgabe zugrunde, einen alternativen einfachen Filter der eingangs genannten Art mit geringen Baumaßen und hoher Durchlaufleistung zu schaffen, der sich durch eine wirkungsvolle Abreinigung der sich an der Filterauflage der Filterscheibe ansammelnden Feststoffe auszeichnet.

Diese Aufgabe wird erfindungsgemäß dadurch gelöst, daß jeder Kasten zum Abnehmen und Entfernen der Feststoffe von den Filterauflagen an seinem zur Drehrichtung der aus hohlen Filtersektoren gebildeten Filterscheibe vorn liegenden Rand eine zugleich die an der zugehörigen Filterauflage der Filterscheibe angesammelten Feststoffe pressende und von der Filterauflage lösende, konische Dichtwalze aufweist, die zumindest mit einer Auflage aus weichelastischem Material, wie Gummi, Kunststoff od.dgl., versehen ist, und weiterhin jeder Kasten an seinem zur Drehrichtung der Filterscheibe hinten liegenden Rand mindestens eine zugleich die an der zugehörigen Filterauflage der Filterscheibe angesammelten Feststoffe von der Filterauflage abschälende Dichtlippe aufweist. Diese Dichtlippe ist mit ihrer freien Längskante entgegen der Drehrichtung der Filterscheibe gerichtet und besteht aus einem weichelastischen Material, wie beispielsweise Gummi oder Kunststoff.

Die Dichtwalze wird unter elastischer Verformung ihrer Auflage gegen die Filterfläche der Filterscheibe gedrückt, wodurch eine dichte Anlage erzielt wird. Dabei wird zugleich der an der zugehörigen Filterfläche der Filterscheibe vorhandene Feststoff gepreßt und dadurch die noch darin vorhandene Flüssigkeit entfernt. Gleichzeitig kann mit der konischen Dichtwalze auch der an der Filterfläche vorhandene Feststoff gelöst und ohne Stau abgefördert werden. Ein Verkleben und ein Verschmieren der Filterplattenoberfläche wird wirksam verhindert. Durch eine oder mehrere Dichtlippen am zur Drehrichtung der Filterscheibe hinten liegenden Rand eines jeden Kastens wird ebenfalls eine dichte Anlage des Kastens gegen die Filterauflage der Filterscheiben erzielt, wobei zugleich der Rest der Feststoffe von der Filterauflage abgeschält wird, da die Dichtlippe mit ihrer freien Längskante entgegen der Drehrichtung der Filterscheibe gerichtet ist.

Da beim bestimmungsgemäßen Gebrauch des Filters die Filterscheiben vollständig in die zu filternde Flüssigkeit eingetaucht sind, so die gesamte Filterfläche der Filterscheiben ausgenutzt wird, und durch die erfindungsgemäße Gestaltung der Entfernung des Feststoffes eine Verstopfung der Filterauflagen unterbunden wird, können große Durchlaufleistungen bei geringen Baumaßen des Filters erzielt werden.

Jeder Kasten kann auch an seinem zur Drehrichtung der Filterscheibe vorn liegenden Rand anstelle der Dichtwalze eine breite Dichtleiste aus weichelastischem Material aufweisen, die mit ihrer vorderen Längskante entgegen der Drehrichtung der Filterscheibe gerichtet ist. Durch eine geringfügige Schrägstellung der Leiste gegenüber der Filterfläche der Filterscheibe werden mit der Leiste zugleich eine dichtende Wirkung und eine die an der zugehörigen Filterauflage der Filterscheibe angesammelten Feststoffe verdichtende Pressung erzielt. Die sichere Abdichtung am hinteren Rand wird dadurch gewährleistet, daß die Leiste gegen die Filterfläche der Filterscheibe gedrückt wird.

Eine weitere Verbesserung der Reinigung nach dem Abschälen der Feststoffreste von der Filterauflage läßt sich dadurch erzielen, daß bei einer Anordnung von mindestens zwei Dichtlippen an dem zur Drehrichtung der Filterscheibe hinten liegenden Rand des Kasten der Einlaß von Filtrat aus dem Hohlraum der Filterscheibe in den Kasten durch den Abstandspalt zwischen den beiden Dichtlippen erfolgt.

Diese zusätzliche Reinigung durch Flüssigkeit läßt sich noch dadurch weiter aktivieren, daß in dem zwischen zwei Dichtlippen vorgesehenen Abstandspalt ein vorzugsweise mit Filtrat beschicktes Spritzrohr mit einer Reihe von gegen die Filterauflage gerichteten Spritzdüsen vorgesehen ist.

Jeder Kasten kann an seinem dem inneren Rand und an seinem dem äußeren Rand der von der Hohlwelle durchgriffenen Filterscheibe zugekehrten Enden mit Dichtplatten, vorzugsweise mit Labyrinthe aufweisenden Dichtplatten, gegen radial innen und außen an sich an die Filterauflagen anschließenden Dichtflächen der Filterscheibe anliegen. Dadurch wird in einfacher Weise auch in diesen Bereichen eine dichte Anlage des Kastens gegen die Dichtflächen der Filterscheiben erzielt, so daß die den Kasten umspülende, zu filtrierende Flüssigkeit nicht in das Innere des Kastens gelangen kann, in dem die Feststoffe gesammelt werden.

Jeweils zwischen zwei benachbarten Filterscheiben können jeweils zwei vorzugsweise miteinander verbundene Kästen angeordnet und durch Schwenken um eine Drehlagerung mit der erforderlichen Anpreßkraft gegen die Filterauflagen der Filterflächen andrückbar sein. Dadurch sind in einfacher Weise jeweils zwischen zwei benachbarten Filterscheiben jeweils zwei miteinader verbundene Kästen angeordnet. Dadurch wird die Montage vereinfacht, da die beiden Kästen jeweils zu einer Baueinheit vereinigt sind und nur noch jeweils eine Baueinheit zwischen jeweils zwei benachbarten Filterscheiben einzusetzen ist. Durch ein Schwenken der Baueinheit können die Kästen mit dem erforderlichen Anpreßdruck gegen die Filterauflagen der Filterscheiben angedrückt werden.

Der Abtransport der sich im Kasten sammelnden Feststoffe kann mittels Absaugung erfolgen. Dadurch ist in vorteilhafter Weise ein kontinuierlicher Abtransport der sich im Kasten sammelnden Feststoffe od.dgl. gewährleistet.

Der Abtransport der sich im Kasten sammelnden Feststoffe kann auch mit einer mechanischen Einrichtung, vorzugsweise mit mindestens einer Förderschnecke, erfolgen. Dadurch ist ebenfalls ein kontinuierlicher Abtransport der sich im Kasten sammelnden Feststoffe gewährleistet, der auch doch durch Unterdruck unterstützt werden kann.

Die konische Dichtwalze kann im feststehenden Kasten drehbar gelagert und mit einem an ihrem einen Ende vorgesehenen Ritzel in einem an der sich drehenden Filterscheibe vorgesehenen Zahnkranz eingreifen. Die im feststehenden Kasten gelagerte Dichtwalze wird somit in vorteilhafter Weise durch die sich mit der Hohlwelle drehenden Filterscheibe angetrieben, so daß die Dichtwalze sich zuverlässig auf der Filterfläche der Filterscheibe abwälzen kann.

Der Kasten kann zwischen seiner Dichtwalze und seiner Dichtlippe einen ausreichend breiten Abstandsspalt zum Einlassen von Filtrat aus dem Hohlraum der zugehörigen Filterscheibe in den Kasten, vorzugsweise unter der Wirkung des im Feststoffsammelkasten herrschenden Unterdruckes aufweisen. Dadurch wird im Kasten die an den Filterflächen der Filterscheiben sich ansammelnden Feststoffe nicht nur abgenommen, sondern die Filterfläche der Filterscheibe auch noch gespült, so daß auch noch die letzten Reste von Feststoffen od.dgl. von den Filterflächen der Filterscheiben gelöst werden. Die dabei in den Kasten eintretende Flüssigkeit dient dabei zugleich auch zum leichteren Abtransport der Feststoffe.

Die Einführung der mit einem höheren Druck als das Filtrat versehenen, zu filternden Flüssigkeit in den Behälter kann durch Rohre erfolgen, deren Enden jeweils unmittelbar in Drehrichtung der Filterscheiben hinter den Kästen parallel zu diesen verlaufen und Auslaßschlitze derart aufweisen, daß die zu filternde Flüssigkeit von dem Kasten weg, benachbart zur Filterauflage im wesentlichen parallel zu dieser ausfließt. Dadurch wird in vorteilhafter Weise die zu filternde Flüssigkeit in einem solchen Bereich in den Behälter eingeführt, in dessen Nachbarschaft Teile der Filterscheibe angeordnet sind, die gerade der Reinigung unterworfen waren.

Das Druckgefälle zwischen der zu filternden Flüssigkeit kann mit einem die Ausflußmenge dem durch die Hohlwelle ausfließenden Filtrats einstellbaren Ventil geregelt werden. Dadurch kann in vorteilhafter Weise durch Vergrößern der Ventilöffnung das Druckgefälle erhöht werden und durch Verkleinern der Ventilöffnung das Druckgefälle verkleinert werden.

Jeder Filtersektor kann aus einem U-Profil-Rahmen mit perforierten Stützplatten und aufgezogener Filterauflage bestehen und der Hohlraum eines jeden Filtersektors kann mit einer Zwischenwand in zwei Teile mit vorzugsweise gleichgroßen Filterflächen unterteilt sein, wobei die Ableitung des Filtrats, aus dem der Hohlwelle zugekehrten Teil durch den Fußteil und aus dem der Behälterwand zugekehrten Teil durch Durchbrüche im seitlichen U-Profil-Rahmen und durch beidseitig zwischen dem U-Profil-Rahmen und dem Tragrahmen gebildeten Kanälen und dem Fußteil erfolgt. Dadurch erfolgt in einfacher und zuverlässiger Weise eine Aufteilung des aus jedem Filtersektor austretenden Filtrats, wobei jeder Filtersektor in einfacher Weise herstellbar und montierbar ist.

Auf der Zeichnung ist die Erfindung in einem Ausführungsbeispiel dargestellt und zwar zeigen:
- Fig. 1: einen erfindungsgemäßen Filter zum kontinuierlichen Filtern von Feststoffen aufweisenden Flüssigkeiten in Seitenansicht,

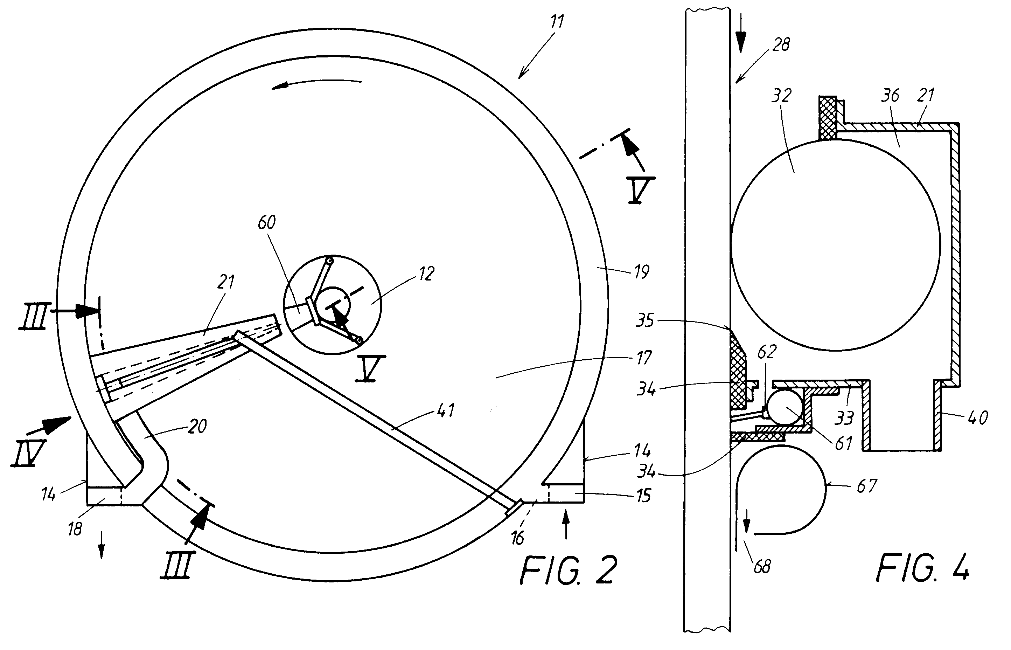

- Fig. 2: einen Schnitt nach der Linie II - II der Fig. 1,
- Fig. 3: einen Schnitt nach der Linie III - III der Fig. 2,
- Fig. 4: eine Ansicht auf einen Kasten zum Abnehmen und Entfernen der Feststoffe in Richtung des Pfeiles IV gesehen,
- Fig. 5: einen Schnitt nach der Linie V - V der Fig. 2, teilweise weggebrochen,
- Fig. 6: einen Schnitt nach der Linie VI - VI der Fig. 5,
- Fig. 7: einen Schnitt nach der Linie VII - VII der Fig. 6,

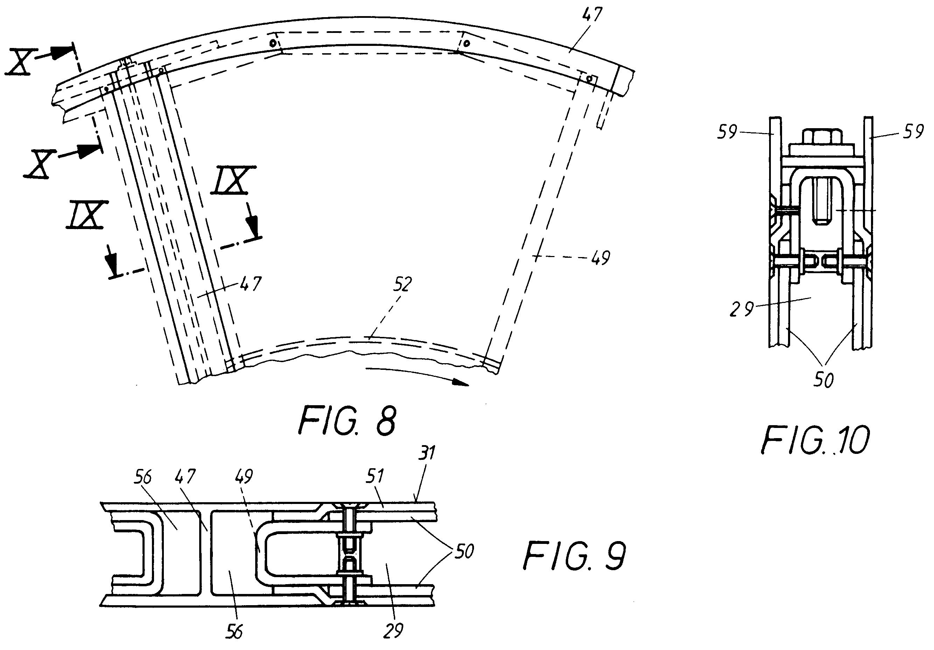

- Fig. 8: eine Ansicht auf die Seitenfläche einer Filterscheibe, teilweise weggebrochen,
- Fig. 9: einen Schnitt nach der Linie IX -IX der Fig. 8,
- Fig. 10: einen Schnitt nach der Linie X - X der Fig. 8,
- Fig. 11: eine Seitenansicht eines von mehreren eine Filterscheibe bildenden Filtersektors,
- Fig. 12: eine zweite Ausführung eines Kastens zum Abnehmen und Entfernen der Feststoffe in einem der Fig. 3 entsprechenden Schnitt und
- Fig. 13: eine zweite Ausführung der vorderen Abdichtung des Kastens zum Abnehmen und Entfernen der Feststoffe in einem der Fig. 4 entsprechenden Schnitt.

Die in den Zeichnungen dargestellte Filtereinrichtung zum kontinuierlichen Filtern von Feststoffen aufweisenden Flüssigkeiten besteht aus einem liegenden, mit Endböden 1o geschlossenen, zylindrischen Behälter 11, der vollständig mit der zu filternden Flüssigkeit gefüllt ist, mit einem Druckgefälle zwischen der zu filternden Flüssigkeit und dem Filtrat. In den Endböden 10 des Behälters 11 ist eine Hohlwelle 12 drehbar gelagert, die zentrisch den Behälter 11 durchgreift und mit einem Motor 13 antreibbar ist. Der liegende zylindrische Druckbehälter 11 sitzt auf zwei parallel zur zentrischen Hohlwelle 12 verlaufende und am unteren Drittel angreifende hohle Längsträger 14, von denen der eine die Zuführleitung 15 für die zu filtrierende Flüssigkeit bildet und über Durchbrüche 16 mit dem Innenraum 17 des Behälters 11 in Verbindung steht, während der andere die Abführleitung 18 für die ausgefilterten Feststoffe od.dgl.bildet und über die Wand 19 des Behälters 11 durchquerende Leitungen 2o mit Kästen 21 in Verbindung steht, die zum Abnehmen und Entfernen der Feststoffe dienen.

Die dem Behälter 11 zugeordneten Längsträger 14 sind dabei über die Enden des Behälters 11 hinaus verlängert und mit Querträger 22 miteinander verbunden, die Lager 23 für die Hohlwelle 12 bilden. Die Hohlwelle 12 bildet zugleich den Auslaß 24 für das Filtrat, d.h. für die Flüssigkeit, aus der die Feststoffe ausgefiltert sind. Das Filtrat kann dabei aus dem Auslaß 24 der Hohlwelle 12 in den Einlaß 25 eines nicht näher dargestellten Aufnahmebehälters od.dgl. fließen.

An dem dem Auslaß 24 abgekehrten Ende der Hohlwelle 12 ist die Hohlwelle 12 mit einer Achse 26 verlängert, die einerseits abgedichtet im Endboden 1o des Druckbehälters 11 drehbar und andererseits im Lager 23 des Querträgers 22 gelagert ist. Die Achse 26 steht in Wirkverbindung mit einem Getriebe 27, welches ebenfalls am Querträger 22 vorgesehen ist und den Motor 13 trägt. Mit dem Motor 13 und dem Getriebe 27 kann die Hohlwelle 12 mit der gewünschten und erforderlichen Drehzahl gedreht werden.

Die motorisch angetriebene, horizontal verlaufende und zugleich den Auslaß 24 für das Filtrat bildende Hohlwelle 12 weist mehrere hohle Filterscheiben 28 auf, die jeweils beidseitig Filterflächen 31 aufweisen, denen Einrichtungen zum Abnehmen und Entfernen der Feststoffe in Form von Kästen 21 zugeordnet sind. Wie bereits erwähnt, wird die zu filternde Flüssigkeit durch die Zuführleitung 15, die von einem Längsträger 14 gebildet wird, durch Durchbrüche 16 in der Wand 19 des Behälters 11 in den Innenraum 17 des Behälters 11 eingebracht. Der Behälter 11 ist dabei vollständig mit der zu filternden Flüssigkeit gefüllt. Die an der Hohlwelle 12 vorgesehenen hohlen Filterscheiben 28 sind somit vollständig mit der zu filternden Flüssigkeit umgeben. Die hohlen Filterscheiben 28 weisen dabei jeweils beidseitig Filterflächen 31 auf, so daß die Flüssigkeit in den Innenraum 29 der hohlen Filterscheiben 28 fließen kann, während die Feststoffe außenseitig an den Filterflächen 31 der hohlen Filterscheiben 28 verbleiben. In noch zu beschreibender Weise kann dann das Filtrat aus den Innenräumen 29 der hohlen Filterscheiben 28 in die Hohlwelle 12 fließen und somit zum Auslaß 24 gelangen. Die an den Filterflächen 31 der hohlen Filterscheiben 28 verbleibenden Feststoffe können dabei die Filtereigenschaften der Filterscheiben 28 nicht beeinträchtigen, da jede Stelle der Filterflächen 31 der Filterscheiben 28 bei jeder Umdrehung mit der Hohlwelle 12 einmal an dem feststehenden Kasten 21 vorbeikommt, der die Feststoffe in noch zu beschreibender Weise von den Filterflächen 31 abnimmt. Die Drehzahl der Hohlwelle 12 kann dabei der Menge der sich auf den Filterflächen 31 ansammelnden Feststoffe angepaßt werden, damit der Durchfluß der Flüssigkeit durch die Filterflächen 31 nicht unzumutbar beeinträchtigt wird.

Die Filterscheiben 28 sind dabei mit Abständen zueinander lotrecht an der Hohlwelle 12 angeordnet.

Jeder Filterscheibe 28 sind an beiden Seiten feststehende, schmale Kästen 21 zugeordnet, die sich radial zu den Filterscheiben 28 erstrecken und vom inneren bis zum äußeren Rand der von der Hohlwelle 12 durchgriffenen Filterscheibe 28 reichen. Die Feststoffsammelkästen 21 erfassen somit die gesamte Filterscheibe 28 bei einer Drehung der Hohlwelle 12. Jeder Kasten 21 ist geschlossen und vollständig von der zu filternden Flüssigkeit umgeben und liegt abgedichtet gegen die zugehörige, von einer Filterauflage 51 gebildeten Filterfläche 31 an und weist im Anlagebereich mindestens einen, den gesamten Radius der Filterscheibe 28 erfaßenden Einlaßspalt 44 auf.

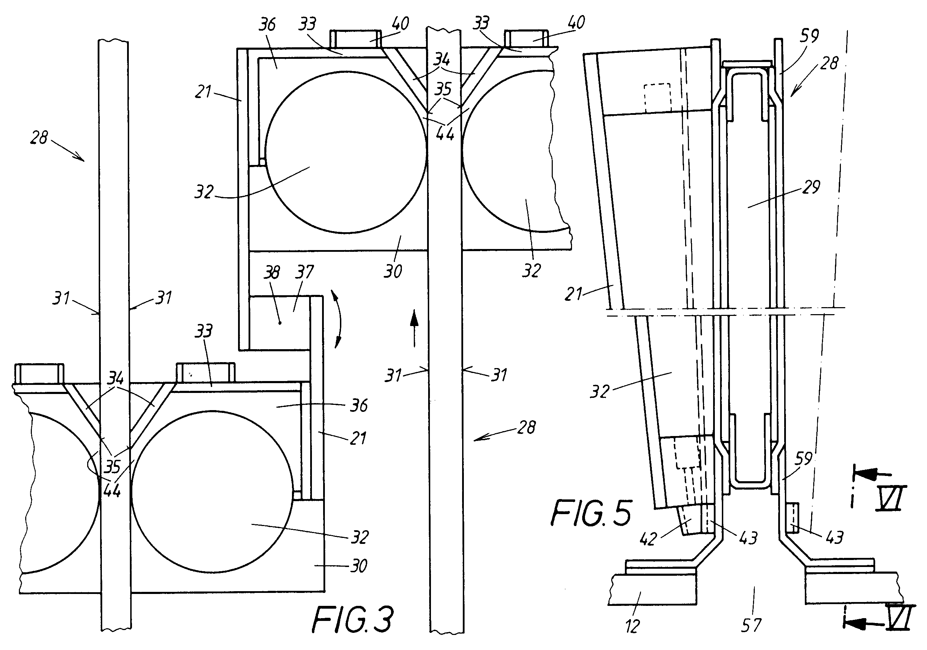

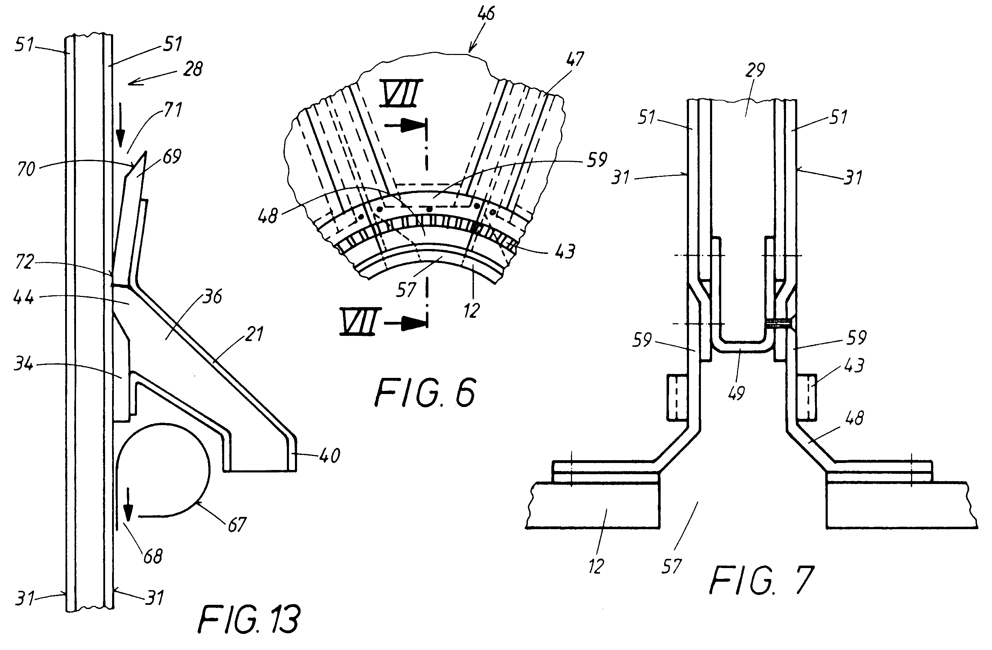

Jeder Kasten 21 weist, wie insbesondere aus den Fig. 3 und 4 ersichtlich, an seinem zur Drehrichtung der Filterscheiben 28 vorn liegenden Rand 30 eine zugleich die sich an der zugehörigen Filterfläche 31 der Filterscheibe 28 ansammelnden Feststoffe od. dgl. pressende und von der Filterfläche 31 lösende, konische Dichtwalze 32 auf. Die Dichtwalze 32 ist dabei in nicht näher dargestellter Weise mit einer Auflage aus weichelastischem Material, wie Gummi, Kunststoff od.dgl. versehen. Durch Andrücken der Dichtwalze 32 gegen die von der Filterauflage 51 gebildete Filterfläche 31 der Filterscheibe 28 wird somit eine dichte Anlage erzielt, die zumindest einen breiten Streifen erfaßt, in-dem die an der Filterfläche 31 vorhandenen Feststoffe zugleich gepreßt werden, so daß Flüssigkeit aus diesen Feststoffen entfernt wird.

Bei einer Anordnung einer breiten Leiste 69 an dem zur Drehrichtung der Scheibe 28 vorn liegenden Rand 30 kann in ähnlicher Weise durch eine geringfügige Schrägstellung der Leiste 69 gegenüber der Filterfläche 51 der Filterscheibe 28 eine die angesammelten Feststoffe verdichtende Pressung erzielt werden. Die breite Leiste 69 wird gegen die Filterfläche 51 der Filterscheibe 28 gedrückt, wodurch eine sichere Abdichtung an ihrem hinteren Rand 72 gewährleistet ist, (Fig. 13).

Wie weiterhin den Fig. 3 und 4 zu entnehmen ist, weist jeder Kasten 21 an seinem zur Drehrichtung der Filterscheiben 28 hinten liegenden Rand 33 mindestens eine zugleich die sich an der zugehörigen Filterfläche 31 der Filterscheibe 28 ansammelnden Feststoffe von der Filterfläche 31 abschälende Dichtlippe 34 auf, die mit ihrer freien Längskante 35 entgegen der Drehrichtung der Filterscheibe 28 gerichtet ist und aus weichelastischem Material, wie Gummi, Kunststoff od.dgl. besteht. Damit liegt auch der in Drehrichtung der Filterscheibe 28 hinten liegende Rand 33 des Feststoffsammelkastens 21 dicht gegen die Filterfläche 31 der Filterscheibe 28 an, wobei die entgegen der Drehrichtung der Filterscheibe 28 gerichtete freie Längskante 35 der Dichtlippe 34 zugleich die sich an der Filterfläche 31 der Filterscheibe 28 angesammelten Feststoffe von der Filterfläche 31 abschält.

Jeder Kasten 21 liegt an seinem den inneren Rand, und an seinem den äußeren Rand der von der Hohlwelle 12 durchgriffenen Filterscheibe 28 zugekehrten Enden mit nicht näher dargestellten Dichtplatten, vorzugsweise Labyrinthe aufweisenden Dichtplatten gegen die an den Filterflächen 31 radial innen und außen anschließenden Dichtflächen 59 der Filterscheibe 28 an. Dadurch ist in einfacher Weise jeder Kasten 21 dicht gegen die Filterscheiben 28 angeordnet, so daß die im Behälter 11 vorhandene zu filternde Flüssigkeit nicht in den Innenraum 36 des Kastens 21 gelangen kann, da dieser insbesondere für die Aufnahme der Feststoffe vorgesehen ist. Damit jedoch die Feststoffe im Kasten 21 fließen können und somit aus den Kästen entfernbar sind, kann in noch zu beschreibender Weise etwas Filtrat in den Kasten 21 eingebracht werden.

Jeweils zwischen zwei benachbarten Filterscheiben 28 sind jeweils zwei über eine Drehlagerung 37 miteinander verbundene Kästen 21 angeordnet und durch Schwenken mit der erforderlichen Anpreßkraft gegen die Filterflächen 31 der Filterscheiben 28 andrückbar. Wie insbesondere aus der Fig. 3 ersichtlich, sind jeweils die beiden zwischen zwei benachbarten Filterscheiben 28 vorgesehenen beiden Kästen 21 etwas seitlich zueinander versetzt, während die Drehlagerung 37 dazwischen liegt. Durch Schwenken der beiden miteinander verbundene Kästen 21 um die Schwenkachse 38 wird somit in einfacher Weise der erforderliche Anpreßdruck erzielt, wobei das Verschwenken mit einem nicht näher dargestellen Hebel erfolgen kann, mit dem die Kästen 21 zugleich in der eingestellten Schwenklage festsetzbar sind.

Der Abtransport der sich im Innenraum 36 des Kastens 21 sammelnden Feststoffe kann mittels Absaugung erfolgen. Hierzu kann an der Abführleitung 18 eine nicht näher dargestellte Saugpumpe vorgesehen werden.

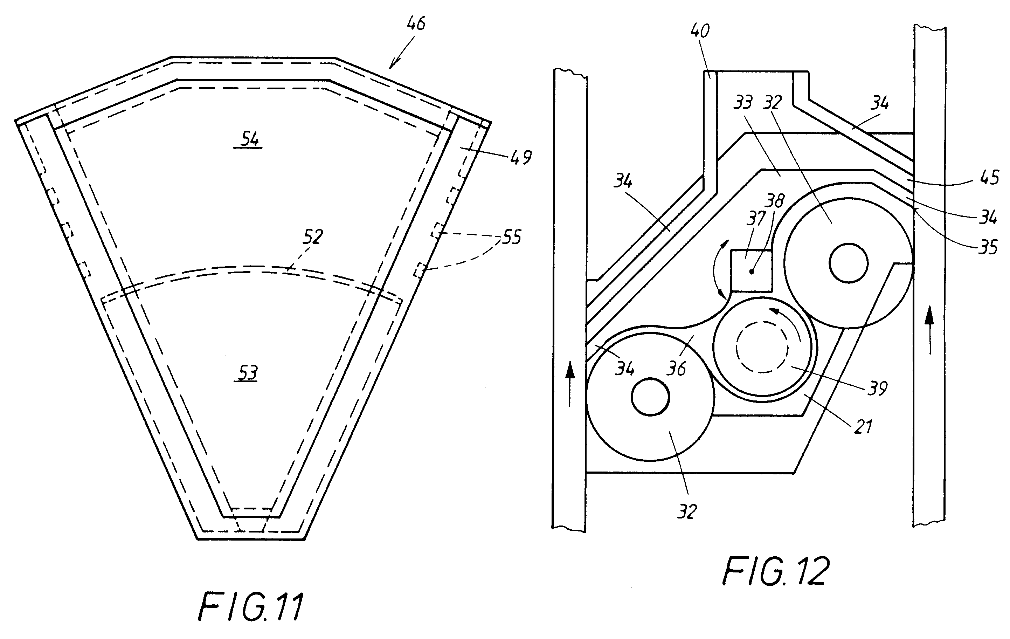

Wie insbesondere aus der Fig. 12 ersichtlich, kann der Abtransport des sich im Innenraum 36 des Kastens 21 ansammelnden Feststoffes mit einer motorisch angetriebenen Förderschnecke 39 unterstützt werden. Der motorische Antrieb der Förderschnecke 39 ist dabei nicht näher dargestellt. Bei dem in der Fig. 12 dargestellten Kastens 21 ist die Ausbildung derart vorgenommen worden, daß zwischen zwei benachbarten Filterscheiben 28 lediglich ein Kasten 21 vorgesehen ist, der jedoch für jede der beiden Filterscheiben 28 je eine Dichtwalze 32 und je eine Dichtlippe 34 aufweist. Der Fig. 12 ist dabei auch noch weiterhin zu entnehmen, daß dieser Kasten 21 für jede Filterscheibe 28 zwei Dichtlippen 34 aufweist, die mit einem Abstand zueinander hintereinander angeordnet sind. Außerdem ist bei diesem Kasten 21 auch noch der Anschlußstutzen 40 für die Ablaufleitungen 2o ersichtlich.

Wie bereits erläutert, ist der Kasten 21 feststehend im Behälter 11 angeordnet. Hierzu ist jeder Kasten 21 einerends an der Wand 19 des Behälters 11 in nicht näher dargestellter Weise gehaltert, während das andere Ende des Kastens 21 mit einer Stütze 41 ebenfalls an der Wand 19 des Behälters 11 befestigt ist. Die konische Dichtwalze 32 ist im feststehenden Kasten 21 drehbar gelagert und greift mit einem an ihrem inneren oder äußeren Ende vorgesehenen Ritzel 42 in einem an der sich drehenden Filterscheibe 28 vorgesehenen Zahnkranz 43 ein. Beim bestimmungsgemäßen Drehen der Filterscheibe 28 dreht sich der Zahnkranz 43 mit und wirkt auf die Ritzel 42 der Dichtwalzen 32 derart ein, daß sich die Dichtwalzen 32 auf den Filterflächen 31 der Filterscheiben 28 abwälzen. Damit sich die Dichtwalze 32 über ihre gesamte Länge gleichmäßig abwälzt, ist sie entsprechend konisch ausgebildet.

Wie insbesondere aus den Fig. 3 und 4 ersichtlich, weist jeder Kasten 21 zwischen seiner Dichtwalze 32 und seiner Dichtlippe 34 einen ausreichend breiten Spalt 44 zum Einlaß von Filtrat aus dem Hohlraum 29 der zugehörigen Filterscheibe 28 in den Kasten 21, vorzugsweise unter der Wirkung des im Kasten 21 herrschenden Unterdruckes, auf. Hierdurch wird in einfacher Weise eine Reinigung der die Filterfläche 31 bildenden Filterauflage 51 der Filterscheibe 28 erzielt und gleichzeitig Feststoffe von den Filterflächen 31 abgenommen. Bei einer Anordnung von mindestens zwei Dichtlippen 34 an dem zur Drehrichtung der Filterscheiben 28 hinten liegenden Rand 33 des Kastens 21, wie es in der Fig. 12 dargestellt ist, kann das Einfließen von Filtrat aus dem Hohlraum 29 der zugehörigen Filterscheibe 28 in den Kasten 21 durch einen Abstandsspalt 45 zwischen den beiden Dichtlippen 34 erfolgen. Auch hierdurch wird eine Reinigung der die Filterflächen 31 bildenden Filterauflagen 51 erzielt.

Bei einer Anordnung von mindestens zwei Dichtlippen 34 an den zur Drehrichtung der Filterscheiben 28 hinten liegenden Rand 33 des Kastens 21, kann in dem Abstandspalt 45 zwischen den beiden Dichtlippen 34, wie insbesondere aus der Fig. 4 ersichtlich, ein vorzugsweise mit Filtrat beschicktes Spritzrohr 61 mit einer Reihe von gegen die Filterfläche 31 gerichteten Spritzdüsen 62 vorgesehen sein. Durch das Aufspritzen von Filtrat auf die Filterflächen 31 wird somit in einfacher Weise eine zuverlässige Reinigung der Filterflächen 31 erzielt.

Jedem Kasten 21 kann zusätzlich zum Aufreißen dichter, an den Filterflächen 31 der Filterscheiben 28 fest anhaftender Feststoffschichten, in nicht dargestellter Weise, jeweils mindestens eine entsprechend strukturierte Vorrichtung, wie Walze, Schaber, Rechen od.dgl. zugeordnet werden. Mit solchen zusätzlichen Einrichtungen kann in einfacher Weise auch eine fest anhaftende Feststoffschicht an der Filterfläche 31 der Filterscheibe 28 gelockert und die Entfeuchtung durch die aufgerissenen Kanäle verbessert werden.

Jede Filterscheibe 28 ist in mehrere, vorzugsweise zwei bis zehn, je in sich geschlossene Filtersektoren 46 unterteilt. Jeder Filtersektor 46 ist in einem Tragrahmen 47 einsetzbar, wobei jeder Tragrahmen 47 an einen Fußteil 48 und der Fußteil 48 an der zentrisch im zylindrischen Behälter 11 drehbar gelagerten Hohlwelle 12 befestigt ist. Durch jedes Fußteil 48 erfolgt jeweils die Verbindung des Hohlraumes der Hohlwelle 12 mit dem Hohlraum 29 des zugehörigen Filtersektors 46 der Filterscheibe 28. Die Filtersektoren 46 sind somit in einfacher Weise zuverlässig mit dem Tragrahmen 47 und dem Fußteil 48 an der Hohlwelle 12 gehaltert. Jeder Filtersektor 46 besteht dabei aus einem U-Profil-Rahmen 49 mit perforierten Stützplatten 50 und aufgezogener Filterauflage 51, die die Filterfläche 31 bildet. Die Filtersektoren 46 sind somit in einfacher Weise herstellbar und zuverlässig an dem Tragrahmen 47 montierbar. Die Stützplatten 50 weisen dabei radial und/oder axial zur Hohlwelle 12 verlaufende, nicht näher dargestellte Schlitze auf, wobei die ausgestanzten Schlitze nach innen zur Verbesserung der Stabilität umgekantete Ränder aufweisen.

Der Hohlraum 29 eines jeden Filtersektors 46 einer jeden Filterscheibe 28 ist mit einer Zwischenwand 52 in zwei Teile mit vorzugsweise gleichgroßen Filterflächen 31 unterteilt, wobei die Ableitung des Filtrats aus dem der Hohlwelle 12 zugekehrten Teil 53 durch den Fußteil 48 und aus dem der Behälterwand 19 zugekehrten Teil 54 durch Durchbrüche 55 im seitlichen U-Profil-Rahmen 49 und durch beidseitig zwischen dem U-Profil-Rahmen 49 und dem Tragrahmen 47 gebildeten Kanälen 56 und dem Fußteil 48 erfolgt. Dadurch wird in einfacher Weise ein Flüssigkeitsstau am schmalen inneren Ende des inneren Teiles 53 des Filtersektors 46 vermieden.

Die Abdichtung zwischen dem Tragrahmen 47 und den Filtersektoren 46 erfolgt mit flächig aufeinanderliegenden Profilteilen vom Tragrahmen 47 und den Filtersektoren 46 und der dazwischen eingeklemmten Filterauflage 51. Dadurch wird in einfacher Weise eine zuverlässige Abdichtung erzielt.

In der zentrisch im Druckbehälter 11 drehbar gelagerten Hohlwelle 12 kann eine dessen gesamte Länge erfassende feststehende Rückspülkammer 6o für unter Druck stehendes Filtrat außermittig angeordnet sein, die abgedichtet mit einem Teilbereich gegen die Innenwand der Hohlwelle 12 anliegt und Spülfiltrat durch die verbeiwandernden, zu den Hohlräumen 29 der Filtersektoren 46 der Filterscheiben 28 führenden Durchbrüche 57 liefert, die gerade die Kästen 21 passieren. Dadurch wird in einfacher Weise erreicht, daß aus den Filtersektoren 46, die gerade die Kästen 21 passieren, kein Filtrat durch die Hohlwelle abfließen kann. Die gerade die Kästen 21 passierenden Filtersektoren 46 stehen dann mit der Rückspülkammer in Verbindung, so daß in diesem Bereich die Filterflächen 31 der Filterauflagen 51 der Filterscheiben 28 durch die Rückspülung mit Filtrat gesäubert werden.

Die Rückspülkammer 6o kann dabei mit Führungen, Streben und Stützrollen in der sich drehenden Hohlwelle 12 feststehend positioniert sein.

Der Druckbehälter 11 weist oberseitig einen Stutzen 58 für die Entlüftung auf, an diesem Stutzen 58 kann auch ein Überdruckventil für die Druckregelung innerhalb des Druckbehälters 11 vorgesehen sein. Die Flüssigkeit kann dabei im Druckbehälter 11 einen Druck von etwa 1 bis 5 bar aufweisen.

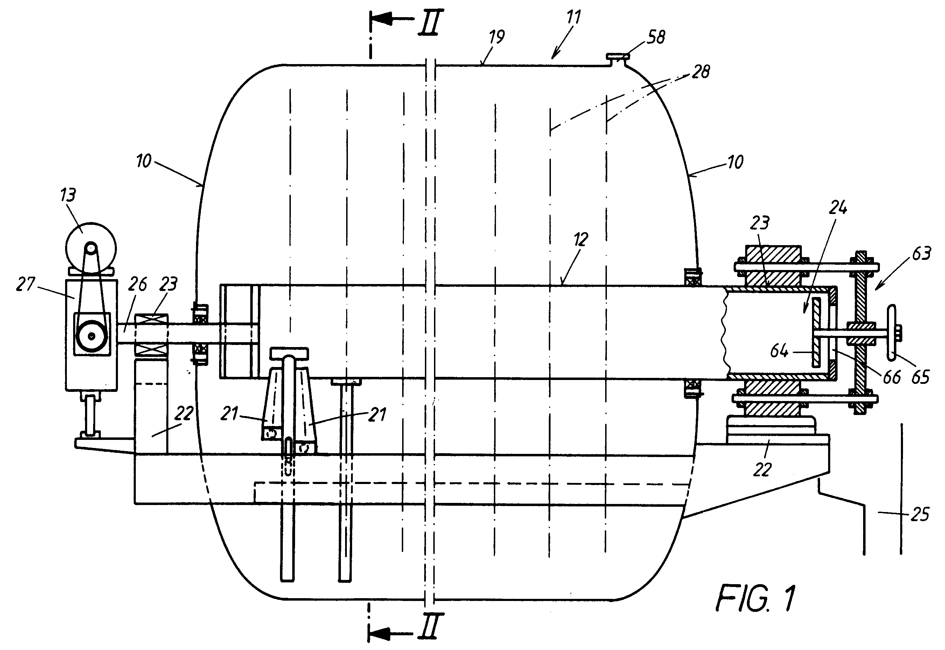

Das Druckgefälle zwischen der zu filternden Flüssigkeit und dem Filtrat ist, wie insbesondere aus der Fig. 1 ersichtlich, mit einem die Ausflußmenge des durch die Hohlwelle 12 ausfließenden Filtrats mit einem von Hand einstellbaren Ventil 63 regelbar. Durch Verstellen des Ventiltellers 64 mit dem Handrad 65 wird die Ausflußöffnung 66 zur Regulierung des Druckgefälles entsprechend mehr oder weniger geöffnet. Anstatt der dargestellten Handbetätigung ist dabei auch eine automatische Regelung in Abhängigkeit vom Druckgefälle möglich.

Die Einführung der mit einem höheren Druck als das Filtrat versehenen, zu filternden Flüssigkeit in den Behälter 11 kann durch Rohre 67 erfolgen, deren Enden jeweils unmittelbar in Drehrichtung der Filterscheiben 28 hinter den Kästen 21 parallel zu diesen verlaufen und Auslaßschlitze 68 derart aufweisen, daß die zu filternde Flüssigkeit von dem Kasten 21 weg, benachbart zur Filterauflage 51 im wesentlichen parallel zu dieser ausfließt. Dadurch wird in vorteilhafter Weise die zu filternde Flüssigkeit in einem solchen Bereich in dem Behälter 11 eingeführt, in dessen Nachbarschaft Teile der Filterscheiben 28 angeordnet sind, die gerade der Reinigung unterworfen waren. Die Zuführung der zu filternden Flüssigkeit von der Zuführleitung 15 zu den Rohren 67 kann dabei durch die zur Halterung der Kästen 21 vorgesehenen Stützen 41 erfolgen, die hierzu rohrförmig auszubilden und an die Durchbrüche 16 anzuschließen sind.

Wie bereits erwähnt, ist die dargestellte Ausführung lediglich eine beispielsweise Verwirklichung der Erfindung und diese nicht darauf beschränkt. Vielmehr sind noch mancherlei andere Ausführungen und Abänderungen möglich. So könnten die in den Kästen vorgesehenen Förderschnecken auch als Preßschnecken zum weiteren Entfeuchten der Feststoffe ausgebildet sein. Weiterhin können auch andere Fördervorrichtungen, wie Bänder mit Abstreifern und Schaber eingebaut werden.

### Bezugszeichenliste:

- 10: Endboden
- 11: Behälter
- 12: Hohlwelle
- 13: Motor
- 14: Längsträger
- 15: Zuführleitung
- 16: Durchbrüche
- 17: Innenraum
- 18: Abführleitung
- 19: Wand
- 20: Leitungen
- 21: Kasten
- 22: Querträger
- 23: Lager
- 24: Auslaß
- 25: Einlaß
- 26: Achse
- 27: Getriebe
- 28: hohle Filterscheiben
- 29: Innenraum
- 30: vorderer Rand
- 31: Filterfläche
- 32: Dichtwalze
- 33: hinterer Rand
- 34: Dichtlippe
- 35: Längskante
- 36: Innenraum
- 37: Drehlagerung
- 38: Schwenkachse
- 39: Förderschnecke
- 4o: Anschlußstutzen
- 41: Stütze
- 42: Ritzel
- 43: Zahnkranz
- 44: Einlaßspalt
- 45: Abstandsspalt
- 46: Filtersektor
- 47: Tragrahmen
- 48: Fußteil
- 49: U-Profil-Rahmen
- 50: perforierte Stützplatte
- 51: Filterauflage
- 52: Zwischenwand
- 53: innerer Teil
- 54: äußerer Teil
- 55: Durchbrüche
- 56: Kanal
- 57: Durchbrüche
- 58: Stutzen
- 59: Dichtfläche
- 60: Rückspülkammer
- 61: Spritzrohr
- 62: Spritzdüsen
- 63: Ventil
- 64: Ventilteller
- 65: Handrad
- 66: Ausflußöffnung
- 67: Rohr
- 68: Auslaßschlitze
- 69: breite Dichtleiste
- 70: vordere Längskante
- 71: Einlaufspalt
- 72: hintere Längskante

## Patentansprüche

1. Filter zum kontinuierlichen Filtern von Feststoffe aufweisenden Flüssigkeiten in einem geschlossenen, zylindrischen Behälter (11)
mit einem Druckgefälle zwischen der zu filternden Flüssigkeit und dem Filtrat,
mit, in Abstand zueinander stehenden Filterscheiben (28), die auf einer angetriebenen Hohlwelle (12) lotrecht zur Achse der Hohlwelle (12) angeordnet sind,
mit Filterauflagen (51) beidseitig auf jeder Filterscheibe (28) und dazwischen vorgesehenem Hohlraum zum Abfluß des Filtrats durch die Hohlwelle (12),
mit feststehenden Einrichtungen auf beiden Seiten jeder Filterscheibe (28) zum Abnehmen und Entfernen der Feststoffe von den die Filterscheibenaußenseiten bildenden Filterauflagen (51),
wobei jede Einrichtung zum Abnehmen und Entfernen der Feststoffe von den Filterauflagen (51) von je einem geschlossenen und vollständig von der zu filternden Flüssigkeit umgebenen hohlen Kasten (21) gebildet wird, der abgedichtet gegen die zugehörige Filterauflage (51) anliegt und im Anlagebereich mindestens einen, den gesamten Radius der Filterscheibe (28) erfassenden Einlaßspalt (44) aufweist.
**dadurch gekennzeichnet**,
daß jeder Kasten (21) an seinem zur Drehrichtung der aus hohlen Filtersektoren (46) gebildeten Filterscheibe (28) vorn liegenden Rand (30) eine zugleich die an der zugehörigen Filterauflage (51) der Filterscheibe (28) angesammelten Feststoffe pressende und von der Filterauflage (51) lösende, konische Dichtwalze (32) aufweist,
die zumindest mit einer Auflage aus weichelastischem Material, wie Gummi, Kunststoff od.dgl., versehen ist,
und jeder Kasten (21) an seinem zur Drehrichtung der Filterscheibe (28) hinten liegenden Rand (33) mindestens eine zugleich die an der zugehörigen Filterauflage (51) der Filterscheibe (28) angesammelten Feststoffe von der Filterauflage (51) abschälende Dichtlippe (34) aufweist,
die mit ihrer freien Längskante (35) entgegen der Drehrichtung der Filterscheibe (28) gerichtet ist und aus weichelastischem Material, wie Gummi, Kunststoff od.dgl., besteht.

2. Filter nach Anspruch 1, dadurch gekennzeichnet, daß bei einer Anordnung von mindestens zwei Dichtlippen (34) an dem zur Drehrichtung der Filterscheibe (28) hinten liegenden Rand (33) des Kastens (21) der Einlaß von Filtrat aus dem Hohlraum der Filterscheibe (28) in den Kasten (21) durch den Abstandspalt (45) zwischen den beiden Dichtlippen (34) erfolgt.

3. Filter nach Anspruch 1, dadurch gekennzeichnet, daß bei einer Anordnung von mindestens zwei Dichtlippen (34) an dem zur Drehrichtung der Filterscheibe (28) hinten liegenden Rand (33) des Kastens (21) in einem zwischen den beiden Dichtlippen (34) vorgesehenen Abstandspalt (45) ein vorzugsweise mit Filtrat beschicktes Spritzrohr (61) mit einer Reihe von gegen die Filterauflage (51) gerichteten Spritzdüsen (62) vorgesehen ist.

4. Filter nach einem der Ansprüche 1 bis 3, dadurch gekennzeichnet, daß jeder Kasten (21) an seinem dem inneren Rand und seinem dem äußeren Rand der von der Hohlwelle (12) durchgriffenen Filterscheibe (28) zugekehrten Enden mit Dichtplatten, vorzugsweise mit Labyrinthe aufweisenden Dichtplatten, gegen radial innen und außen an sich an die Filterauflagen (51) anschließenden Dichtflächen (59) der Filterscheibe (28) anliegt.

5. Filter nach einem der Ansprüche 1 bis 4, dadurch gekennzeichnet, daß jeweils zwischen zwei benachbarten Filterscheiben (28) jeweils zwei vorzugsweise miteinander verbundene Kästen (21) angeordnet und durch Schwenken um eine Drehlagerung (37) mit der erforderlichen Anpreßkraft gegen die Filterauflagen (51) der Filterscheiben (28) andrückbar sind.

6. Filter nach einem der Ansprüche 1 bis 5, dadurch gekennzeichnet, daß der Abtransport der sich im Kasten (21) sammelnden Feststoffe mittels Absaugung erfolgt.

7. Filter nach einem der Ansprüche 1 bis 5, dadurch gekennzeichnet, daß der Abtransport der sich im Kasten (21) sammelnden Feststoffe mit einer mechanischen Einrichtung, vorzugsweise mit mindestens einer Förderschnecke (39) erfolgt.

8. Filter nach einem der Ansprüche 1 bis 7, dadurch gekennzeichnet, daß die Einführung der mit einem höheren Druck als das Filtrat versehenen, zu filternden Flüssigkeit in den Behälter (11) durch Rohre (67) erfolgt, deren Enden jeweils unmittelbar in Drehrichtung der Filterscheiben (28) hinter den Kästen (21) parallel zu diesen verlaufen und Auslaßschlitze (68) derart aufweisen, daß die zu filternde Flüssigkeit von dem Kasten (21) weg, benachbart zur Filterauflage (51) im wesentlichen parallel zu dieser ausließt.

9. Filter nach einem der Ansprüche 1 bis 8, dadurch gekennzeichnet, daß das Druckgefälle zwischen der zu filternden Flüssigkeit und dem Filtrat mit einem die Ausflußmenge des durch die Hohlwelle (12) ausfließenden Filtrats einstellbaren Ventil (63) regelbar ist.

10. Filter nach einem der Ansprüche 1 bis 9, dadurch gekennzeichnet, daß jeder Filtersektor (46) aus einem U-Profil-Rahmen (49) mit perforierten Stützplatten (50) und aufgezogener Filterauflage (51) besteht und der Hohlraum (29) eines jeden Filtersektors (46) mit einer Zwischenwand (52) in zwei Teile mit vorzugsweise gleichgroßen Filterflächen (31) unterteilt ist, wobei die Ableitung des Filtrats aus dem der Hohlwelle (12) zugekehrten Teil (53) durch den Fußteil (48) und aus dem der Behälterwand (19) zugekehrten Teil (54) durch Durchbrüche (55) im seitlichen U-Profil-Rahmen (49) und durch beidseitig zwischen dem U-Profil-Rahmen (49) und dem Tragrahmen (47) gebildeten Kanälen (56) und dem Fußteil (48) erfolgt.

11. Filter nach einem der Ansprüche 1 bis 10, dadurch gekennzeichnet, daß die konische Dichtwalze (32) im feststehenden Kasten (21) drehbar gelagert und mit einem an ihrem Ende vorgesehenen Ritzel (42) in einem an der sich drehenden Filterscheibe (28) vorgesehenen Zahnkranz (43) eingreift.

12. Filter nach einem der Ansprüche 1 bis 11, dadurch gekennzeichnet, daß der Kasten (21) zwischen seiner Dichtwalze (32) und seiner Dichtlippe (34) einen ausreichend breiten Einlaßspalt (44) zum Einlassen von Filtrat aus dem Hohlraum der zugehörigen Filterscheibe (28) in den Kasten (21), vorzugsweise unter der Wirkung eines im Kasten (21) herrschenden Unterdruckes, aufweist.

13. Filter nach einem der Ansprüche 1 bis 10, dadurch gekennzeichnet, daß jeder Kasten (21) an seinem zur Drehrichtung der Filterscheibe (28) vorn liegenden Rand (30) anstelle der Dichtwalze (32) eine zugleich die an der zugehörigen Filterauflage (51) der Filterscheibe (28) angesammelten Feststoffe pressende, breite Dichtleiste (69) aufweist, die aus weichelastischem Material, wie Gummi, Kunststoff od.dgl., besteht und mit ihrer vorderen Längskante (70) entgegen der Drehrichtung der Filterscheibe (28) gerichtet ist und gegenüber der Filterauflage (51) einen Einlaufspalt (71) bildet, wobei die hintere Längskante (72) gegen die Filterauflage (51) dicht gelagert ist.

## Claims

1. A filter for continuously filtering liquids having solids, in a closed cylindrical container (11)
with a pressure drop between the liquid to be filtered and the filtrate,
with spaced-apart filter discs (28) which are arranged on a driven hollow shaft (12) perpendicularly to the axis of the hollow shaft (12),
with filter coverings (51) on both sides on each filter disc (28) and a cavity provided therebetween for the discharge flow of the filtrate through the hollow shaft (12),
with fixed devices on both sides of each filter disc (28) for detaching and removing the solids from the filter coverings (51) forming the outsides of the filter discs,
wherein each device for detaching and removing the solids from the filter coverings (51) is formed by a respective closed hollow casing (21) which is completely surrounded by the liquid to be filtered and which bears in sealed relationship against the associated filter covering (51) and which in the contact region has at least one inlet gap (44) involving the entire radius of the filter disc (28),
characterised in that
at its edge (30) which is at the front in relation to the direction of rotation of the filter disc (28) which is formed from hollow filter sectors (46) each casing (21) has a conical sealing roller (32) which at the same time presses the solids accumulated on the associated filter covering (51) of the filter disc (28) and loosens them from the filter covering (51)
and which is provided at least with a covering of soft-elastic material such as rubber, plastics material or the like,
and at its edge (33) which is at the rear in relation to the direction of rotation of the filter disc (28) each casing (21) has at least one sealing lip (34) which at the same time peels the solids accumulated on the associated filter covering (51) of the filter disc (28) off the filter covering (51)
and which is directed with its free longitudinal edge (34) in opposite relationship to the direction of rotation of the filter disc (28) and comprises soft-elastic material such as rubber, plastics material or the like.

2. A filter according to claim 1 characterised in that, with an arrangement of at least two sealing lips (34) on the edge (33) of the casing (21) which is at the rear in relation to the direction of rotation of the filter disc (28) the intake of filtrate from the cavity of the filter disc (28) into the casing (21) occurs through the spacing (45) between the two sealing lips (34).

3. A filter according to claim 1 characterised in that, with an arrangement of at least two sealing lips (34) at the edge (33) of the casing (21) which is at the rear in relation to the direction of rotation of the filter disc (28) provided in a gap (45) between the two sealing lips (34) is a spray tube (61) which is preferably fed with filtrate, having a row of spray nozzles (62) which are directed towards the filter covering (51).

4. A filter according to one of claims 1 to 3 characterised in that at its ends which are towards the inner edge and the outer edge of the filter disc (28) through which the hollow shaft (12) passes each casing (21) bears with sealing plates, preferably with sealing plates having labyrinths, against sealing surfaces (59) of the filter disc (28), which radially inwardly and outwardly adjoin the filter coverings (51).

5. A filter according to one of claims 1 to 4 characterised in that two preferably interconnected casings (21) are respectively arranged between each two adjacent filter discs (28) and can be pressed against the filter coverings (51) of the filter discs (28) with the required pressing force by pivotal movement about a rotary mounting (37).

6. A filter according to one of claims 1 to 5 characterised in that the solids which accumulate in the casing (21) are transported away by means of suction removal.

7. A filter according to one of claims 1 to 5 characterised in that the solids which accumulate in the casing (21) are transported away by a mechanical device, preferably at least one conveyor screw (39).

8. A filter according to one of claims 1 to 7 characterised in that introduction of the liquid to be filtered which is at a higher pressure than the filtrate into the container (11) is effected through tubes (67) whose ends extend directly behind the casings (21) in the direction of rotation of the filter discs (28) and parallel thereto and have outlet slots (68) in such a way that the liquid to be filtered flows away from the casing (21) adjacent to the filter covering (51) substantially parallel to the latter.

9. A filter according to one of claims 1 to 8 characterised in that the pressure drop between the liquid to be filtered and the filtrate can be regulated with a valve (63) which can adjust the discharge flow amount of the filtrate which flows out through the hollow shaft (12).

10. A filter according to one of claims 1 to 9 characterised in that each filter sector (46) comprises a U-shaped frame (49) with perforated support plates (50) and filter covering (51) arranged thereon and the cavity (29) of each filter sector (46) is subdivided by an intermediate wall (52) into two portions with preferably equally sized filter surfaces (31), wherein the filtrate is discharged out of the portion (53) which is towards the hollow shaft (12) through the base portion (48) and out of the portion (54) which is towards the container wall (19) through apertures (55) in the lateral U-shaped free (49) and through passages (56) formed on both sides between the U-shaped frame (49) and the carrier frame (47), and the base portion (48).

11. A filter according to one of claims 1 to 10 characterised in that the conical sealing roller (38) is rotatably mounted in the fixed casing (21) and with a pinion (42) provided at its end engages in an annular tooth arrangement (43) on the rotating filter disc (28).

12. A filter according to one of claims 1 to 11 characterised in that the casing (21) has between its sealing roller (32) and its sealing lip (34) a sufficiently wide inlet gap (44) for the inlet of filtrate from the cavity of the associated filter disc (28) into the casing (21), preferably under the effect of a reduced pressure obtaining in the casing (21).

13. A filter according to one of claims 1 to 10 characterised in that instead of the sealing roller (32), at its edge (30) which is at the front in relation to the direction of rotation of the filter disc (28) each casing (21) has a wide sealing strip (69) which at the same time presses the solids accumulated at the associated filter covering (51) of the filter disc (28) and which comprises soft-elastic material such as rubber, plastics material or the like and which is directed with its front longitudinal edge (70) in opposite relationship to the direction of rotation of the filter disc (28) and forms an intake gap (71) relative to the filter covering (51), the rear longitudinal edge (72) being mounted sealingly relative to the filter covering (51).

## Revendications

1. Filtre pour la filtration en continu de liquides contenant des matières solides dans un récipient cylindrique fermé (11),
avec une chute de pression entre le liquide à filtrer et le filtrat,
avec des disques de filtre (28) mutuellement distants, qui sont disposés sur un arbre creux entraîné (12) perpendiculairement à l'axe de l'arbre creux (12),
avec des revêtements filtrants (51) de part et d'autre sur chaque disque de filtre (28), et un espace creux intermédiaire pour évacuer le filtrat par l'arbre creux (12),
avec des dispositifs fixes sur les deux côtés de chaque disque de filtre (28), pour enlever et évacuer les matières solides des revêtements filtrants (51) constituant les côtés extérieurs des disques de filtre,
chaque dispositif pour enlever et évacuer les matières solides des revêtements filtrants (51) étant formé par un caisson creux (21) fermé et totalement entouré par le liquide à filtrer, caisson qui s'applique en étanchéité contre le revêtement filtrant associé (51) et qui présente, dans la région d'application, au moins une fente d'admission (44) embrassant la totalité du rayon du disque de filtre (28),
**caractérisé** en ce que chaque caisson (21) présente, sur son bord (30) situé en avant par rapport à la direction de rotation du disque de filtre (28) constitué de secteurs de filtre creux (46), un rouleau d'étanchéité conique (32) qui, en même temps, comprime les matières solides accumulées sur le revêtement filtrant associé (51) du disque de filtre (28) et les détache du revêtement filtrant (51), rouleau qui est au moins pourvu d'un revêtement en matériau souple et élastique, tel que du caoutchouc, une matière plastique ou analogue,
et chaque caisson (21) présente, sur son bord (33) situé en arrière par rapport à la direction de rotation du disque de filtre (28), au moins une lèvre d'étanchéité (34) qui, en même temps, décolle du revêtement filtrant (51) les matières solides accumulées sur le revêtement filtrant associé (51) du disque de filtre (28),
lèvre qui est orientée à l'encontre de la direction de rotation du disque de filtre (28) par son bord longitudinal libre (35) et qui est réalisée en matériau souple et élastique tel que du caoutchouc, une matière plastique ou analogue.

2. Filtre selon la revendication 1, **caractérisé** en ce que, en présence d'au moins deux lèvres d'étanchéité (34) sur le bord (33) du caisson (21) qui est situé en arrière par rapport à la direction de rotation du disque de filtre (28), l'admission dans le caisson (21) de filtrat en provenance de l'espace creux du disque de filtre (28) s'effectue par la fente d'espacement (45) entre les deux lèvres d'étanchéité (34).

3. Filtre selon la revendication 1, **caractérisé** en ce que, en présence d'au moins deux lèvres d'étanchéité (34) sur le bord (33) du caisson (21) qui est situé en arrière par rapport à la direction de rotation du disque de filtre (28), un tube d'aspersion (61), de préférence alimenté en filtrat et pourvu d'une série de buses d'aspersion (62) dirigées vers le revêtement filtrant (51), est prévu dans une fente d'espacement (45) prévue entre les deux lèvres d'étanchéité (34).

4. Filtre selon l'une quelconque des revendications 1 à 3 **caractérisé** en ce que chaque caisson (21), à ses extrémités respectivement tournées vers le bord intérieur et le bord extérieur du disque de filtre (28) traversé par l'arbre creux (12), s'applique par des plaques d'étanchéité, de préférence des plaques d'étanchéité présentant des labyrinthes, contre des faces d'étanchéité (59) du disque de filtre (28) qui se raccordent radialement à l'intérieur et à l'extérieur aux revêtements filtrants (51).

5. Filtre selon l'une quelconque des revendications 1 à 4 **caractérisé** en ce que deux caissons respectifs (21), de préférence mutuellement reliés, sont chaque fois disposés entre deux disques de filtre voisins (28) et, par pivotement autour d'un palier de pivotement (37), peuvent être pressés avec la force d'application nécessaire contre les revêtements filtrants (51) des disques de filtre (28).

6. Filtre selon l'une quelconque des revendications 1 à 5, **caractérisé** en ce que le transport d'évacuation des matières solides qui s'accumulent dans le caisson (21) s'effectue par aspiration.

7. Filtre selon l'une quelconque des revendications 1 à 5 **caractérisé** en ce que le transport d'évacuation des matières solides qui s'accumulent dans le caisson (21) s'effectue avec un dispositif mécanique, de préférence avec au moins une hélice transporteuse (39).

8. Filtre selon l'une quelconque des revendications 1 à 7, **caractérisé** en ce que l'introduction dans le récipient (11) du liquide à filtrer, doté d'une plus grande pression que le filtrat, s'effectue par des tubes (67) dont les extrémités s'étendent respectivement, immédiatement en arrière des caissons (21) dans la direction de rotation des disques de filtre (28), parallèlement à ces caissons (21) et présentent des fentes d'évacuation (68) de telle sorte que le flux de liquide à filtrer en sort, en éloignement du caisson (21) et au voisinage du revêtement filtrant (51), sensiblement parallèlement à ce dernier.

9. Filtre selon l'une quelconque des revendications 1 à 8, **caractérisé** en ce que la chute de pression entre le liquide à filtrer et le filtrat peut être régulée par une soupape (63) permettant de régler le débit d'écoulement du filtrat évacué par l'arbre creux (12).

10. Filtre selon l'une quelconque des revendications 1 à 9, **caractérisé** en ce que chaque secteur de filtre (46) est constitué d'un cadre profilé en U (49) avec des plaques de soutien perforées (50) et un revêtement filtrant (51) monté dessus, et l'espace creux (29) de chaque secteur de filtre (46) est divisé par une cloison intermédiaire (52) en deux parties présentant de préférence des surfaces filtrantes (31) de même taille, l'évacuation du filtrat hors de la partie (53) tournée vers l'arbre creux (12) s'effectuant par la base (48), et son évacuation hors de la partie (54) tournée vers la paroi (19) du récipient s'effectuant par des percements (55) dans le cadre profilé en U latéral (49) et par des canaux (56) formés de part et d'autre entre le cadre profilé en U (49) et le cadre porteur (47), et par la base (48).

11. Filtre selon l'une quelconque des revendications 1 à 10, **caractérisé** en ce que le rouleau d'étanchéité conique (32) est monté à rotation dans le caisson fixe (21) et s'engage, par un pignon (42) prévu à son extrémité, dans une couronne dentée (43) prévue sur le disque de filtre rotatif (28).

12. Filtre selon l'une quelconque des revendications 1 à 11, **caractérisé** en ce que le caisson (21) présente, entre son rouleau d'étanchéité (32) et sa lèvre d'étanchéité (34), une fente d'admission (44) suffisamment large pour l'admission dans le caisson (21) de filtrat provenant de l'espace creux du disque de filtre associé (28), de préférence sous l'action d'une dépression régnant dans le caisson (21).

13. Filtre selon l'une quelconque des revendications 1 à 10, **caractérisé** en ce que chaque caisson (21) présente, sur son bord (30) situé en avant par rapport à la direction de rotation du disque de filtre (28), au lieu du rouleau d'étanchéité (32), une large bordure d'étanchéité (69) qui, en même temps, comprime les matières solides accumulées sur le revêtement filtrant associé (51) du disque de filtre (28), bordure qui est réalisée en matériau souple et élastique tel que du caoutchouc, une matière plastique ou analogue et dont le bord longitudinal avant (70) est orienté à l'encontre de la direction de rotation du disque de filtre (28) et forme une fente d'entrée (71) par rapport au revêtement filtrant (51), le bord longitudinal arrière (72) étant pressé en étanchéité contre le revêtement filtrant (51).
